# EUROPEAN PATENT SPECIFICATION

(11) **EP 1 134 642 B1**
(45) Date of publication and mention of the grant of the patent: **10.12.2003**
(21) Application number: 00830175.6
(22) Date of filing: 09.03.2000
(51) Int. Cl.: G05D 23/13, F16K 31/00, F01P 7/16

(54) **Thermostatic valve for controlling the flow of the coolant liquid in an internal combustion engine**
Thermostatventil zur Regelung des Kühlmitteldurchflusses in einer Brennkraftmaschine
Soupape thermostatique de régulation du débit de liquide de refroidissement dans un moteur à combustion interne

(43) Date of publication of application: 19.09.2001
(73) Proprietor: Behr Thermot-tronik Italia S.p.A., 10123 Torino (IT)
(72) Inventor: Triberti, Franco, 10095 Grugliasco (Torino) (IT)
(74) Representative: Buzzi, Franco

(56) References cited:
- EP-A- 0 794 327
- FR-A- 1 506 985
- GB-A- 1 388 945
- GB-A- 2 245 956
- US-A- 4 193 542

## Description

The present invention relates in a general way to thermostatic valves used in circuits for the circulation of heat-exchange fluids, and in particular for controlling the flow of the coolant liquid in an internal combustion engine for a motor vehicle.

More specifically the invention relates to a thermostatic valve of the type comprising a hollow body defining a tubular passage, a coupling connector connected to the tubular passage, a valve unit located inside the hollow body to control communication between the said tubular passage and the said connector and containing a thermostatic element formed by an envelope containing a heat-expandable material, a reaction rod to which the said envelope is coupled with freedom of axial movement, a cap-type valve shutoff member that is axially integral with the envelope and able to engage with an annular valve seat located between the said tubular passage and the said connector, and an elastic compression member tending to push the said valve shutoff member to a closed position against the said valve seat.

In such thermostatic valves the reaction rod of the valve unit acts axially against a stationary bearing part.

In the prior art this stationary bearing part is normally constructed in two different ways: in the first way, described for example in documents EP-A-0600150, EP-A-0825372 and GB-A-2286675, the bearing part is formed integrally with the connector and is normally a hollow axial boss supported by radial arms. With this solution the connector, which is usually moulded plastic, is connected rigidly to the hollow body by more or less complicated mechanical fixing systems.

In the second known approach the bearing part is a separate component, normally of metal, whose outer edge is clamped and locked between the hollow body and the connector, which again are fixed rigidly together. This approach, which is also employed in thermostatic valves which the Applicant has long been producing and marketing, may have a variant in which the component forming the bearing part is produced in moulded plastic, e.g. as envisaged in EP-A-0,432,103.

This approach therefore similarly requires that the body and the connector be separate parts which are then connected mechanically together with conventional systems. This results in relatively high production costs.

A further drawback with these known approaches lies in the relative complexity of the operations of assembling together the valve unit, the hollow body and the connector.

It is an object of the present invention to obviate the abovementioned drawbacks, and more particularly to provide a thermostatic valve of the type defined above that can be manufactured and assembled in an appreciably simpler and more economical fashion.

According to the invention this object is achieved essentially due to the fact that, in a thermostatic valve of the type defined at the start, the said bearing part against which the reaction rod of the valve unit acts axially comprises an annular flange part inserted and locked by snap engagement in an internal annular seat in the said hollow body.

With this inventive concept it is no longer necessary to produce the hollow body and the connector as two separate and distinct parts which then have to be assembled together, and furthermore the fitting together of the valve unit, and hence the assembling of the complete thermostatic valve, are made significantly easier and more economical. To summarize, the aggregate cost of the thermostatic valve according to the invention can be substantially lower than that of conventional thermostatic valves of the same type.

Other features and advantages of the invention will become evident in the course of the detailed description that follows, referring to the appended drawings which are supplied purely by way of non-restrictive examples. In the drawings:

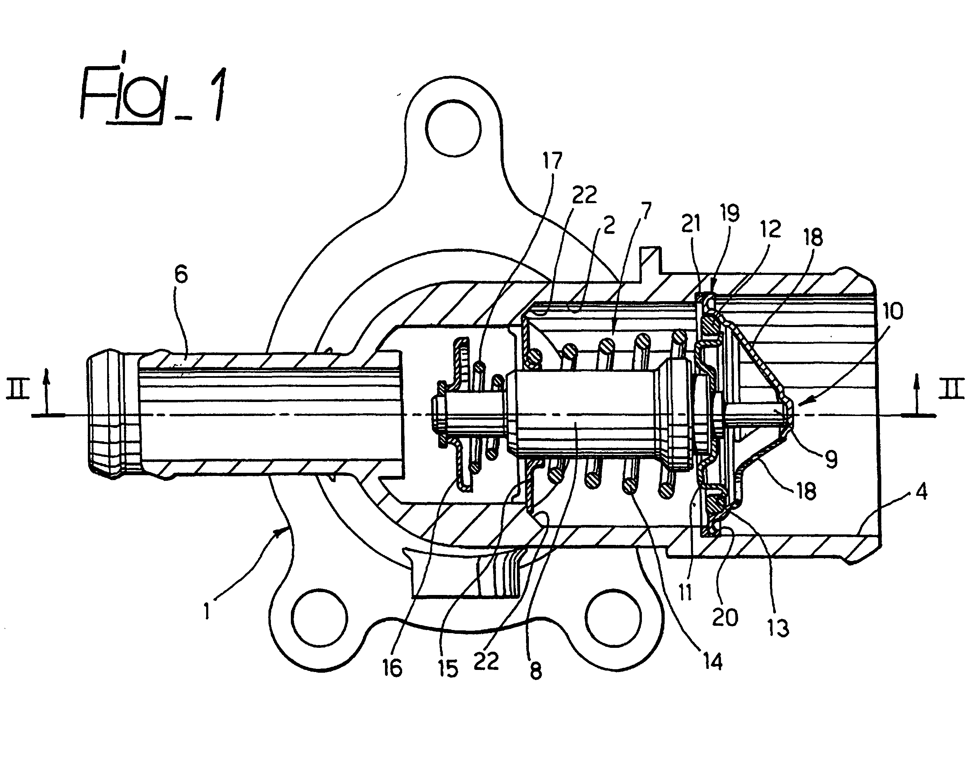

- Figure 1 is a schematic view in partial longitudinal section of a thermostatic valve according to the invention,

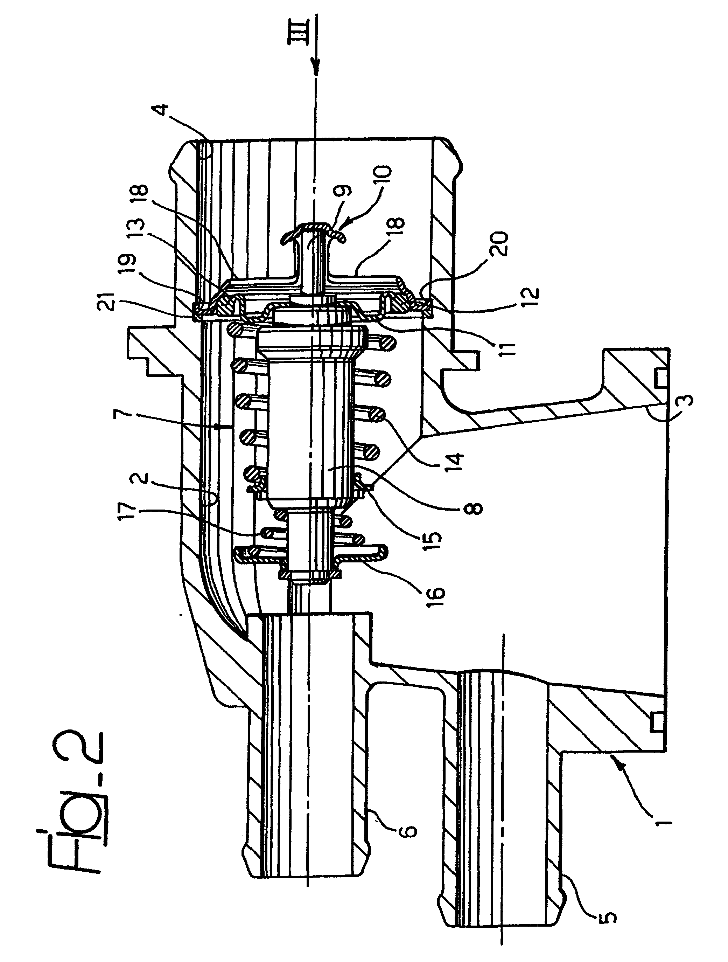

- Figure 2 is a longitudinal section on II-II as marked in Figure 1, and

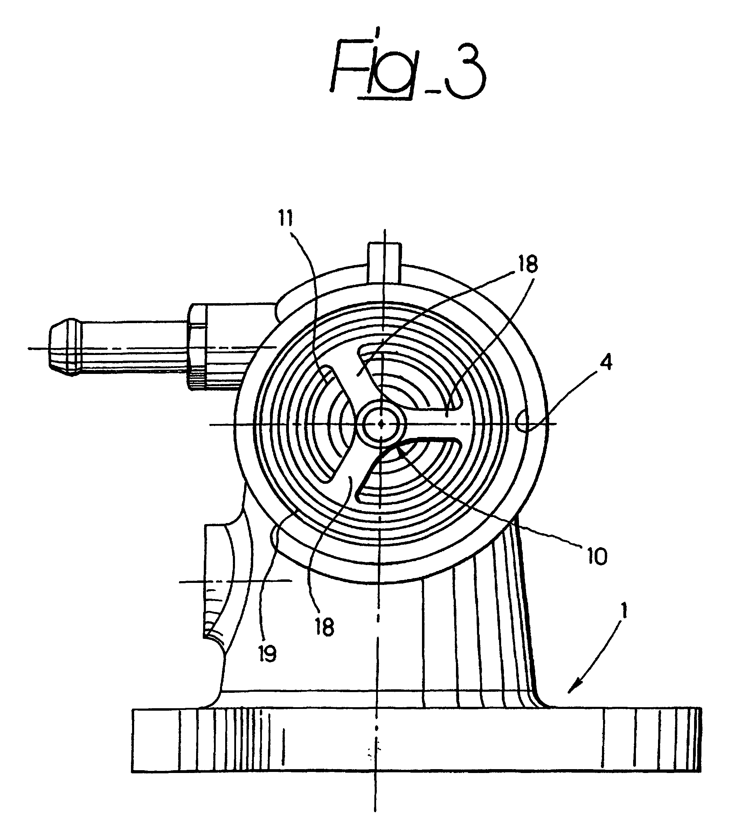

- Figure 3 is a side view in the direction of arrow III as marked in Figure 2.

Referring to the drawings, the thermostatic valve unit according to the invention essentially comprises a hollow body with the general reference 1, normally made of pressure diecast aluminium or of a high-strength moulded plastic, which defines a tubular passage 2 communicating on one side with an inlet 3 and on the other with an outlet connector 4.

Because of the features described below, the connector 4 is formed integrally in a single piece with the hollow body 1, rather than being, as in the prior art, a separate component.

The inlet 3 is intended to be connected to the liquid coolant circuit of an internal combustion engine, while the connector 4 is designed to be connected to the radiator in which this liquid is cooled.

The hollow body 1 can also be formed with two outlet couplings 5, 6, of which the first is for connection to e.g. the heating unit for the passenger compartment of the vehicle in which the engine is installed, and the second - coaxial with the connector 4 - is for connection to a coolant liquid recirculating passage.

The number 7 denotes a thermostatic valve unit positioned inside the hollow body 1 coaxially with the connector 4 (and with outlet coupling 6) to control communication between the tubular passage 2 and the said connector 4.

The valve unit 7 is of generally conventional type and basically corresponds, both structurally and functionally, to the unit described for example in the already cited document EP-A-0,600,150. For the purposes of the present invention it is sufficient to explain that the valve unit 7 comprises a cylindrical envelope 8 containing a heat-expandable material (such as wax) and a rod 9 that reacts axially against a stationary bearing part 10 which will be described in further detail later. The envelope 8, which is coupled with freedom of axial movement to the rod 9, is axially integral with a cap-type valve shutoff member 11 provided with an O-ring 12, the latter engaging with an annular valve seat 13 which will also be described in further detail later. The cap-type shutoff member 11 is subjected to the action of a helical compression spring 14 placed between this shutoff member 11 and a crosspiece 15, through which the envelope 8 is guided in its axial movements. In the example illustrated the thermostatic unit 7 is also provided with another cap-type shutoff member 16 with an associated compression spring 17 located at the opposite end from the cap-type shutoff member 11 and designed to engage in a known way with the recirculation coupling 6.

The fundamental aspect of the invention is that the bearing part 10 consists of a dome-like part defined by a series of spokes 18 (three in the example illustrated) which connect up obliquely with an annular flange part 19 that exhibits a circular shape corresponding to that of the connector 4. The outside diameter of the flange 19 surmounted by the dome-part 10 is slightly greater than the inside diameter of the connector 4, and the spokes 18 are elastically springy.

The annular flange 19 is housed and clamped axially inside an internal annular groove 20 formed in the hollow body 1 between the tubular passage 2 and the connector 4. As can be seen in the drawings the circumferential outer edge of the flange 19 is formed into a channel, i.e. it has a C-shaped cross section, the cavity being turned towards the free end of the connector 4. Between the base of the annular flange 19 and the groove 20 an O-ring 21 is advantageously inserted.

The annular valve seat 13 with which the O-ring 12 of the cap-type shutoff member 11 engages is defined by the conical inside wall of the bearing part 10 next to the annular flange 19.

Given the structure described above, during the assembly of the thermostatic unit 7 the bearing part 10 is inserted axially into the connector 4, forcing the annular flange 19 along the inside wall of this connector 4, by means of the elastic deformation of the spokes 18, until the annular flange 19 snaps into position in the internal groove 20. The C-section of the annular flange 19 makes this snap engagement irreversible.

The ends of the crosspiece 15 against which the compression spring 14 reacts are held, following the positioning described above of the valve unit 7 in the hollow body 1, on respective bearing parts 22 formed in the inside wall of the tubular passage 2. These bearing parts are advantageously defined by an internal annular step in the hollow body 1 having a conical surface that diverges towards the connector 4.

In operation, the cap-type shutoff member 11 with its O-ring 12 is normally closed against the annular valve seat 13 of the bearing part 10. When the temperature inside the tubular passage 2 reaches a predetermined value the heat-sensitive material inside the envelope 8 expands, pushing the latter axially away from the connector 4 along the reaction rod 9 which is reacting against the bearing part 10. The cap-type shutoff member 11 is thus moved away from the valve seat 13, against the action of the spring 14. The liquid can now flow from the tubular passage 2 towards the connector 4.

Needless to say, the details of construction and the particular embodiments can be greatly modified compared to those described and illustrated without thereby departing from the scope of the present invention as defined in the following claims.

## Claims

1. Thermostatic valve (1) for controlling the flow of the coolant liquid in an internal combustion engine, comprising a hollow body (1) defining a tubular passage (2), a coupling connector (4) connected to the said tubular passage (2), a valve unit (7) located inside the said hollow body (1) to control communication between the said tubular passage (2) and the said connector (4) and containing a thermostatic element formed by an envelope (8) containing a heat-expandable material, a reaction rod (9) to which the said envelope (8) is coupled with freedom of axial movement, a cap-type valve shutoff member (11, 12) that is axially integral with the envelope (8) and able to engage with an annular valve seat (13) located between the said tubular passage (2) and the said connector (4), an elastic compression member (14) tending to push the said valve shutoff member (11, 12) to a closed position against the said valve seat (13), and a stationary bearing part (10) against which the said reaction rod (9) pushes axially, the said valve being **characterized in that** the said bearing part (10) comprises an annular flange part (19) inserted and locked by snap engagement in an internal annular seat (20) in the said hollow body.

2. Valve according to Claim 1, **characterized in that** the said bearing part (10) is formed by a dome that surmounts the said flange part (19) and is connected to the latter by a series of elastically deformable spokes (18).

3. Valve according to Claim 1 or Claim 2, **characterized in that** the said flange part (19) possesses an outer edge with a channelled profile for irreversible engagement in the said annular seat (20).

4. Valve according to any one of the preceding claims **characterized in that** between the said annular flange part (19) and the said internal annular seat (20) of the hollow body (1) is an O-ring (21).

5. Valve according to any one of the preceding claims, **characterized in that** the said bearing part (10) defines the said annular valve seat (13) in the vicinity of the said flange part (19).

6. Valve according to Claim 5, **characterized in that** the said annular valve seat (13) has a conical surface.

7. Valve according to any one of the preceding claims, in which the said elastic compression member (14) reacts, at the opposite end from the said valve shutoff member (11, 12), against a crosspiece (15) whose ends are engaged on respective bearing parts (22) of the said hollow body (1), the said valve being **characterized in that** the said bearing parts consist of an internal annular step (22) in the said hollow body (1) .

8. Valve according to Claim 7, **characterized in that** the said internal step (22) is conical.

9. Valve according to one or more of the preceding claims, **characterized in that** the said hollow body (1) and the said coupling connector (4) are formed integrally in a single piece.

## Patentansprüche

1. Thermostatisches Ventil (1) zur Steuerung des Durchflusses der Kühlflüssigkeit in einem Verbrennungsmotor, das einen Hohlkörper (1), der einen röhrenförmigen Durchgang (2) definiert, ein Verbindungselement (4); das mit dem röhrenförmigen Durchgang (2) verbunden ist, eine Ventileinheit (7) enthält, die im Innern des Hohlkörpers (1) angeordnet ist, um eine Kommunikation zwischen dem röhrenförmigen Durchgang (2) und dem Verbinder (4) zu steuern, und die ein thermostatisches Element, das durch einen Mantel (8) gebildet ist, der ein Wärme-dehnbares Material enthält, eine Rückwirkungsstange (9), mit der der Mantel (8) mit Axialbewegungsfreiheit verbunden ist, ein Kappen-artiges Ventilsperrelement (11, 12), das mit dem Mantel (8) axial integral ist und fähig ist, mit einem ringförmigen Ventilsitz (13) Eingriff zu stehen, der zwischen dem röhrenförmigen Durchgang (2) und dem Verbinder (4) angeordnet ist, ein elastisches Druckelement (14), das dazu neigt, das Ventilsperrelement (11, 12) in eine geschlossene Position gegen den Ventilsitz (13) zu schieben, und ein feststehendes tragenden Teil (10) enthält, gegen das sich die Rückwirkungsstange (9) axial schiebt, wobei das Ventil **dadurch gekennzeichnet ist, dass** das feststehende tragende Teil (10) ein ringförmiges Flanschteil (19) enthält, das durch einen Schnappeingriff in einen inneren, ringförmigen Sitz (20) in dem Hohlkörper eingefügt und festgesetzt ist.

2. Ventil gemäß Anspruch 1, **dadurch gekennzeichnet, dass** das tragende Teil (10) durch eine Kuppel gebildet ist, die das Flanschteil (19) übersteigt und mit dem Letzteren durch eine Reihe von elastisch verformbaren Speichen (18) verbunden ist.

3. Ventil gemäß Anspruch 1 oder Anspruch 2, **dadurch gekennzeichnet, dass** das Flanschteil (19) einen Außenrand mit einem gerillten Profil zum irreversiblen Eingreifen in den ringförmigen Sitz (20) besitzt.

4. Ventil gemäß irgendeinem der vorangehenden Ansprüche, **dadurch gekennzeichnet, dass** zwischen dem ringförmigen Flanschteil (19) und dem inneren ringförmigen Sitz (20) des Hohlkörpers (1) ein O-Ring (21) ist.

5. Ventil gemäß irgendeinem der vorangehenden Ansprüche, **dadurch gekennzeichnet, dass** das tragende Teil (10) den ringförmigen Ventilsitz (13) in der Nähe des Flanschteils (19) definiert.

6. Ventil gemäß Anspruch 5, **dadurch gekennzeichnet, dass** der ringförmige Ventilsitz (13) eine kegelförmige Oberfläche aufweist.

7. Ventil gemäß irgendeinem der vorangehenden Ansprüche, bei dem das elastische Druckelement (14) an dem gegenüberliegenden Ende des Ventilsperrelements (11, 12) gegen ein Kreuzstück (15) rückwirkt, dessen Enden mit jeweiligen tragenden Teilen (22) des Hohlkörpers (1) in Eingriff stehen, wobei das Ventil **dadurch gekennzeichnet ist, dass** die tragenden Teile aus einer inneren ringförmigen Stufe (22) in dem Hohlkörper (1) bestehen.

8. Ventil gemäß Anspruch 7, **dadurch gekennzeichnet, dass** die innere Stufe (22) kegelförmig ist.

9. Ventil gemäß irgendeinem der vorangehenden Ansprüche, **dadurch gekennzeichnet, dass** der Hohlkörper (1) und das Verbindungselement (4) in einem einzigen Stück integral gebildet sind.

## Revendications

1. Vanne thermostatique (1) destinée à commander l'écoulement du liquide de refroidissement dans un moteur à combustion interne, comprenant un corps creux (1) définissant un passage tubulaire (2), un raccord d'accouplement (4) relié audit passage tubulaire (2), une unité formant vanne (7) située à l'intérieur dudit corps creux (1) pour commander la communication entre ledit passage tubulaire (2) et ledit raccord (4) et contenant un élément thermostatique formé par une enveloppe (8) contenant un matériau expansible à la chaleur, une tige de réaction (9) à laquelle ladite enveloppe (8) est couplée avec une liberté de déplacement dans le sens axial, un élément de fermeture de type bouchon (11, 12) qui est solidaire dans le sens axial avec l'enveloppe (8) et capable de coopérer avec un siège annulaire (13) de vanne situé entre ledit passage tubulaire (2) et ledit raccord (4), un élément de compression élastique (14) tendant à pousser ledit élément de fermeture (11, 12) de vanne en position fermée contre ledit siège (13) de vanne, et une partie formant support fixe (10) contre laquelle ladite tige de réaction (9) appuie dans le sens axial, ladite vanne étant **caractérisée en ce que** ladite partie formant support (10) comprend une partie formant bride annulaire (19) insérée et verrouillée par encliquetage dans un siège annulaire interne (20) dans ledit corps creux.

2. Vanne selon la revendication 1, **caractérisée en ce que** ladite partie formant support (10) est formée par un dôme qui surmonte ladite partie formant bride (19) et est relié à cette dernière par une série de bras élastiques (18) susceptibles de se déformer.

3. Vanne selon la revendication 1 ou 2, **caractérisée en ce que** ladite partie formant bride (19) possède un bord externe qui présente un profil en gorge pour une mise en prise irréversible dans ledit siège annulaire (20).

4. Vanne selon l'une quelconque des revendications précédentes **caractérisée en ce qu'**un joint torique (21) est placé entre ladite partie formant bride annulaire (19) et ledit siège annulaire interne (20) du corps creux (1 ).

5. Vanne selon l'une quelconque des revendications précédentes **caractérisée en ce que** ladite partie formant support (10) définit ledit siège annulaire (13) de vanne à proximité de ladite partie formant bride (19).

6. Vanne selon la revendication 5, **caractérisée en ce que** ledit siège annulaire (13) de vanne présente une surface conique.

7. Vanne selon l'une quelconque des revendications précédentes, dans laquelle ledit élément de compression élastique (14) réagit, à l'extrémité opposée dudit élément de fermeture (11, 12) de vanne, contre une pièce en croix (15) dont les extrémités coopèrent avec les parties formant supports (22) correspondantes dudit corps creux (1), ladite vanne étant **caractérisée en ce que** lesdites parties formant supports comportent un gradin annulaire interne (22) ménagé dans ledit corps creux (1).

8. Vanne selon la revendication 7, **caractérisée en ce que** ledit gradin interne (22) est conique.

9. Vanne selon une ou plusieurs revendications précédentes, **caractérisée en ce que** ledit corps creux (1) et ledit raccord d'accouplement (4) sont formés en une seule pièce de manière solidaire.
